# EUROPEAN PATENT APPLICATION

(11) **EP 4 840 987 A1**
(43) Date of publication of application: **18.11.2026**
(21) Application number: 25738880.1
(22) Date of filing: 06.01.2025
(51) Int. Cl.: C23C 22/68, C23C 22/74, C23C 22/82

(54) **METHOD FOR PREPARING COATING COMPOSITION**

(30) Priority: 12.01.2024 KR 20240005139
(71) Applicant: LG CHEM, LTD., Seoul 07336 (KR)
(72) Inventor: BYUN, Wonbae, Daejeon 34122 (KR); KIM, Suji, Daejeon 34122 (KR); KIM, Yongseon, Daejeon 34122 (KR); CHOI, Jae Soon, Daejeon 34122 (KR)
(74) Representative: Goddar, Heinz J.
(86) International application number: PCT/KR2025/000214
(87) International publication number: WO 2025/150806

(57) **Abstract**

The present disclosure is directed to providing a method for preparing a coating composition, comprising the steps of: mixing a zirconium precursor and a first polyhydric alcohol to prepare a first solution; adding a binder to the first solution to prepare a second solution; and adding ethanol, polysorbic acid and a second polyhydric alcohol to the second solution to prepare a third solution, the method satisfying Equation 1.

## Description

### [Technical Field]

The present application claims the benefit of Korean Patent Application No. 10-2024-0005139 filed on January 12, 2024, in the Korean Intellectual Property Office, the entire disclosure of which is incorporated herein by reference.

The present disclosure relates to a method for preparing a coating composition.

### [Background Art]

Metal structures can be applied to various fields, such as weight reduction, sound insulation, heat insulation energy absorption, filtration and catalysts, and in some cases, passivation is required. In general, a passivation layer may be coated easily on a flat substrate, such as glass or silicon, but there is a problem in that it is difficult to form a uniform passivation layer on such a surface, because the surfaces of the metal structures have very severe surface irregularities.

In addition, because zirconium dioxide has a very high melting point and a relatively low thermal expansion coefficient, it has strong resistance against chemical reactions and environmental degradation, and thus it can be applied as a passivation material in various applications to protect the surface of a material so that chemical deterioration, such as corrosion and oxidation, may be prevented by virtue of such resistance characteristics.

Therefore, in the corresponding field of technology, it is required to develop a technology to form a passivation layer on a metal structure by using zirconium dioxide.

### [Disclosure]

### [Technical Problem]

The present disclosure is directed to providing a method for preparing a coating composition that can be applied to a variety of uses.

### [Technical Solution]

An exemplary embodiment of the present disclosure provides a method for preparing a coating composition, comprising the steps of:
mixing a zirconium precursor and a first polyhydric alcohol to prepare a first solution;
adding a binder to the first solution to prepare a second solution; and
adding ethanol, polysorbic acid and a second polyhydric alcohol to the second solution to prepare a third solution,
the method satisfying the following Equation 1: [Equation 1] 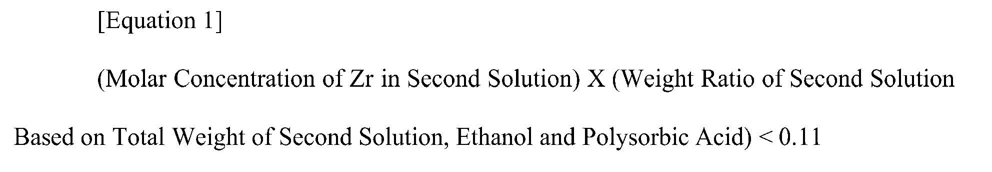 (Molar Concentration of Zr in Second Solution) X (Weight Ratio of Second Solution Based on Total Weight of Second Solution, Ethanol and Polysorbic Acid) < 0.11

Another exemplary embodiment of the present disclosure provides a method for preparing a zirconium dioxide coating layer, comprising the steps of:
preparing a substrate; and
coating the surface of the substrate with the coating composition obtained by the above-mentioned method, followed by drying and firing, to form the zirconium dioxide coating layer on the surface of the substrate.

### [Advantageous Effects]

According to an exemplary embodiment of the present disclosure, it is possible to form a zirconium dioxide coating layer uniformly on the surface of a substrate, such as a metal structure, and to provide a method for preparing a coating composition capable of functioning as a passivation layer.

In addition, it is possible to provide a metal structure applied and used in various fields, such as weight reduction, sound insulation, heat insulation energy absorption, filtration and catalysts, by forming a zirconium dioxide coating layer on the surface of the metal structure by using the coating composition prepared according to an exemplary embodiment of the present disclosure.

### [Brief Description of Drawings]

FIG. 1 is a scanning electron microscopic (SEM) image illustrating the surface of a metal structure coated according to Example 1.
FIG. 2 is a scanning electron microscopic (SEM) image illustrating the surface of a metal structure coated according to Example 6.
FIG. 3 shows an X-ray diffractometry (XRD) image of a powder sample of powder prepared by drying the coating composition of Example 8, after being heat treated at 700°C for 3 hours.
FIG. 4 shows an SEM image of a powder sample of powder prepared by drying the coating composition of Example 8, after being heat treated at 700°C for 3 hours.
FIG. 5 is an SEM image illustrating the surface of a metal structure coated according to Example 8.
FIG. 6 is a high-magnification SEM image illustrating a passivation layer coated according to Example 8.
FIG. 7 is an SEM image illustrating the surface of a metal structure coated according to Comparative Example 2.
FIG. 8 is an SEM image illustrating the surface of a metal structure coated according to Comparative Example 3.
FIG. 9 is an SEM image illustrating the surface of a metal structure coated according to Comparative Example 5.

### [Best Mode]

Hereinafter, the present disclosure will be explained in more detail.

Throughout the present specification, when a certain member is described to be located "on" another member, this comprises not only the case where the member is in contact with said another member but also the case where another member exists between the two members.

Throughout the present specification, when a part is described to "comprise" a component, this does not exclude the presence of another component but rather implies that further components may be comprised, unless the context specifically states otherwise.

In an exemplary embodiment of the present disclosure, the method for preparing a coating composition comprises the steps of: mixing a zirconium precursor and a first polyhydric alcohol to prepare a first solution; adding a binder to the first solution to prepare a second solution; and adding ethanol, polysorbic acid and a second polyhydric alcohol to the second solution to prepare a third solution, the method satisfying the following Equation 1: [Equation 1] 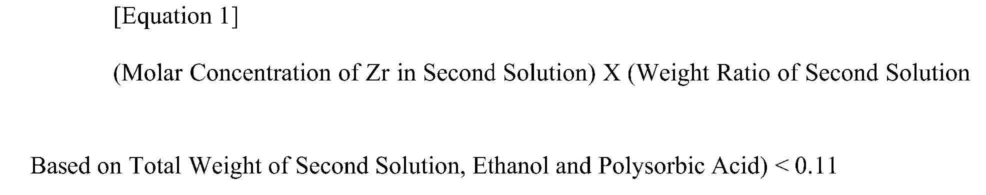 (Molar Concentration of Zr in Second Solution) X (Weight Ratio of Second Solution Based on Total Weight of Second Solution, Ethanol and Polysorbic Acid) < 0.11

The method for preparing a coating composition according to an exemplary embodiment of the present disclosure comprises a step of mixing a zirconium precursor and a first polyhydric alcohol to prepare a first solution.

The zirconium precursor is a precursor of zirconium dioxide forming a coating layer, and the molar ratio of zirconium can be controlled by adjusting the content of the zirconium precursor. The zirconium precursor may be zirconium propoxide, but is not limited thereto.

The first polyhydric alcohol may comprise at least one of 1,4-butanediol, diethylene glycol and triethylene glycol. In addition, the first polyhydric alcohol may comprise 1,4-butanediol and diethylene glycol at the same time, 1,4-butanediol and triethylene glycol at the same time, or 1,4-butanediol, diethylene glycol and triethylene glycol at the same time.

The step of preparing a first solution may be carried out at a temperature of 70°C to 130°C, or 80°C to 100°C. When the step of preparing a first solution is carried out at a temperature of lower than 70°C, the zirconium precursor cannot be dissolved well undesirably. In addition, when the step of preparing a first solution is carried out at a temperature of higher than 130°C, particle precipitation may occur due to hydration undesirably.

The method for preparing a coating composition according to an exemplary embodiment of the present disclosure comprises a step of adding a binder to the first solution to prepare a second solution.

According to an exemplary embodiment of the present disclosure, it is possible to provide a resultant coating layer with improved adhesiveness by adding a binder to the first solution, and thus to prevent separation of a zirconium dioxide thin film even after heat treatment at high temperature.

The binder may comprise polyvinyl pyrrolidone (PVP).

The content of the binder may be 1-5 wt% based on the total weight of 1,4-butanediol used as the first polyhydric alcohol, but is not limited thereto.

The method for preparing a coating composition according to an exemplary embodiment of the present disclosure comprises a step of adding ethanol, polysorbic acid and a second polyhydric alcohol to the second solution to prepare a third solution.

Herein, polysorbic acid may function as a stabilizer and dispersant, and more particularly, may function to inhibit aggregation of Zr particles and to stabilize sol. In addition, the second polyhydric alcohol may function to cause particle precipitation of a part of Zr bound with the first polyhydric alcohol, such as 1,4-butanediol, diethylene glycol and triethylene glycol, by substituting it with hydroxyl groups.

The content of the second solution may be 1 wt% to 40 wt%, specifically 5 wt% to 30 wt%, based on the total weight of the second solution and ethanol. When the content of the second solution is 1 wt% to 40 wt% based on the total weight of the second solution and ethanol, it is possible to form a coating layer uniformly and reproducibly when the composition is coated on the surface of a substrate, such as a metal structure. When the content of the second solution is larger than 40 wt% based on the total weight of the second solution and ethanol, non-uniform gelling may occur during a drying step to cause a phenomenon of occlusion of open pores/cells of the metal structure and a problem of degradation of adhesiveness of a dried thin film undesirably.

The content of polysorbic acid based on the total weight of the second solution and ethanol may be 5 wt% to 45 wt%, or 10 wt% to 40 wt%. When the content of polysorbic acid is larger than 45 wt% based on the total weight of the second solution and ethanol, a finally prepared composition may have increased viscosity to cause defects upon the coating on a substrate, such as a metal structure, undesirably.

The second polyhydric alcohol may comprise ethylene glycol.

The content of the second polyhydric alcohol may be 0.5 wt% to 10 wt%, or 1 wt% to5 wt%, based on the total weight of the second solution and ethanol. When the content of the second polyhydric alcohol is less than 0.5 wt% based on the total weight of the second solution and ethanol, hydration may occur very slowly to cause a problem of an increase in processing time for forming particles undesirably. In addition, when the content of the second polyhydric alcohol is larger than 10 wt% based on the total weight of the second solution and ethanol, hydration may occur rapidly and thus the composition may turn into a paste, which cannot be coated on the surface of a metal structure undesirably.

In the coating composition according to an exemplary embodiment of the present disclosure, the value of the above Equation 1 may be less than 0.11, equal to or less than 0.105, or equal to or less than 0.1. The coating composition according to an exemplary embodiment of the present disclosure may form a coating layer which is a zirconium dioxide thin film uniformly on the surface of a substrate, such as a metal structure, by satisfying the value of Equation 1. When the value of Equation 1 is 0.11 or more, excessive hydration may occur while adding the second polyhydric alcohol, and thus the composition itself may be solidified or may turn into a paste undesirably. Therefore, according to the present disclosure, it has been found that the solution state before adding the second polyhydric alcohol has the most influence on a process of coating a metal structure. In addition, the present inventors have conducted experiments under various conditions to numerically quantify the solution state before adding the second polyhydric alcohol. As a result, the above Equation 1 was derived.

According to an exemplary embodiment of the present disclosure, since the value of Equation 1 should be satisfied, the concentration of zirconia should not be increased excessively to form a thick zirconium dioxide coating layer. In addition, the value of Equation 1 may be decreased by increasing dispersibility through the addition of polysorbic acid according to an exemplary embodiment of the present disclosure. However, since the content of ethanol should be considered simultaneously, it is necessary to control the content of polysorbic acid and that of ethanol suitably to satisfy the above Equation 1.

In an exemplary embodiment of the present disclosure, the coating composition may have a pH value of 6.5 to 7.5, 6.8 to 7.2, or 7. When the above-defined pH range is satisfied, it is possible to prevent a chemical change of the metal structure.

In an exemplary embodiment of the present disclosure, the coating composition may be applied specifically to a passivation layer of a metal structure, a highly refractive coating layer of a glass substrate, a heat-shielding coating layer of a gas turbine, or a bioceramic coating layer of an artificial bone, and more specifically to a passivation layer of a metal structure.

The passivation layer of a metal structure may be applied even to a metal structure having severe surface irregularities. Therefore, it may be applied as a passivation material in various application fields for the purpose of protection of the surface of a material in order to prevent chemical degradation, such as corrosion or oxidation.

The highly refractive coating layer of a glass substrate may be applied to prevent glare by controlling the reflection of the glass substrate, and accordingly, may also be applied to smart glasses.

The heat-shielding coating layer of a gas turbine may be applied to gas turbines for power generation and aviation to obtain a heat insulation effect.

The bioceramic coating layer of an artificial bone may be applied to hydroxyapatitie, an artificial bone, to improve bioaffinity.

In addition, the method for preparing a zirconium dioxide coating layer according to another exemplary embodiment of the present disclosure comprises the steps of: preparing a substrate; and coating the surface of the substrate with the coating composition obtained by the above-mentioned method, followed by drying and firing, to form a zirconium dioxide coating layer on the surface of the substrate.

As described above, the zirconium dioxide coating layer may be a passivation layer of a metal structure, a highly refractive coating layer of a glass substrate, a heat-shielding coating layer of a gas turbine, or a bioceramic coating layer of an artificial bone, and specifically, a passivation layer of a metal structure.

The metal structure may be metal foam comprising NiCrAlFe, NiCrAl, SiC or α-Al₂O₃.

The metal substrate may be a structure having various shapes and may have low heat capacity and high heat transferability to be molded into and used in a desired shape. There is no particular limitation in the shape, size, etc. of the metal structure. The metal structure may have a porosity of 10% to 99%, 50% to 96%, or 85% to 96%. The metal structure may have a cell size of 400 µm to 1,500 µm, or 450 µm to 1,400 µm. When the metal structure has a cell size of less than 400 µm, it is difficult to perform coating of the precursor solution. When the metal structure has a cell size of larger than 1,500 µm, it may support a reduced amount of catalyst, which is disadvantageous in terms of process and is undesired. The metal structure may be prepared suitably by those skilled in the art by using a method known in the art considering the above-described material, cell size, porosity, etc. of the metal structure.

In an exemplary embodiment of the present disclosure, the surface of the substrate may be coated with the coating composition by using a method known in the art, and non-limiting examples of the method comprises dip coating, wash coating, or the like.

In an exemplary embodiment of the present disclosure, said drying may be carried out at a temperature of 50°C to 250°C for 1 hour to 48 hours, at a temperature of 70°C to 200°C for 5 hours to 36 hours, but is not limited thereto. In addition, said firing may be carried out at a temperature of 400°C to 1,300°C for 1 hour to 30 hours under the atmosphere of air, or at a temperature of 600°C to 900°C for 2 hours to 24 hours under the atmosphere of air, but is not limited thereto. When said firing is carried out at a temperature higher than 1,300°C, the substrate itself may undergo a change in physical properties to cause a change in strength, a decrease in length, a change in cell size, or the like, which may affect the quality of a zirconium dioxide coating layer undesirably.

### [Mode for Invention]

Hereinafter, the present disclosure is described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

### <Examples>

### <Preparation Example 1>

While 1,4-butanediol (25 mL) was agitated, diethylene glycol (7.98 g) and zirconium propoxide (7.04 g) were added. The resultant mixture was heated to 100°C while maintaining agitation, and was allowed to stand for 5 hours to prepare a first solution.

Then, the first solution was cooled to room temperature, polyvinyl pyrrolidone (PVP) (0.46 g, Mw = 40,000 g/mol) as a binder was added thereto and mixed therewith thoroughly until it was dissolved, thereby preparing a second solution. The second solution according to Preparation Example 1 had a molar concentration of Zr of 0.6 M.

### <Preparation Example 2>

While 1,4-butanediol (30 mL) was agitated, diethylene glycol (6.37 g) and zirconium propoxide (5.62 g) were added. The resultant mixture was heated to 80°C while maintaining agitation, and was allowed to stand for 5 hours to prepare a first solution.

Then, the first solution was cooled to room temperature, polyvinyl pyrrolidone (PVP) (0.55 g, Mw = 40,000 g/mol) as a binder was added thereto and mixed therewith thoroughly until it was dissolved, thereby preparing a second solution. The second solution according to Preparation Example 2 had a molar concentration of Zr of 0.4 M.

### <Preparation Example 3>

While 1,4-butanediol (40 mL) was agitated, diethylene glycol (4.30 g) and zirconium propoxide (3.79 g) were added. The resultant mixture was heated to 90°C while maintaining agitation, and was allowed to stand for 5 hours to prepare a first solution.

Then, the first solution was cooled to room temperature, polyvinyl pyrrolidone (PVP) (0.74 g, Mw = 40,000 g/mol) as a binder was added thereto and mixed therewith thoroughly until it was dissolved, thereby preparing a second solution. The second solution according to Preparation Example 3 had a molar concentration of Zr of 0.2 M.

### <Preparation Example 4>

While 1,4-butanediol (40 mL) was agitated, diethylene glycol (10.61 g) and zirconium propoxide (9.36 g) were added. The resultant mixture was heated to 90°C while maintaining agitation, and was allowed to stand for 5 hours to prepare a first solution.

Then, the first solution was cooled to room temperature, polyvinyl pyrrolidone (PVP) (0.74 g, Mw = 40,000 g/mol) as a binder was added thereto and mixed therewith thoroughly until it was dissolved, thereby preparing a second solution. The second solution according to Preparation Example 4 had a molar concentration of Zr of 0.5 M.

### <Example 1>

The second solution of Preparation Example 1 was mixed thoroughly with ethanol and polysorbic acid at a predetermined ratio as shown in the following Table 1. Then, ethylene glycol was further added to the resultant mixture, followed by agitation, and the resultant mixture was allowed to cause particle precipitation, thereby preparing a third solution. The third solution had a pH value of 7.

A metal structure (NiCrAl) was dipped in the third solution and ultrasonic vibration was applied for several seconds to remove bubbles in the metal structure. After that, dip coating was carried out, and centrifugal separation was carried out (200 rpm, 5 min.) to remove the remaining solution after completing the dip coating. Then, the coated metal structure was dried in an oven at 150°C. The dried metal structure was introduced to a furnace and heated to 700°C for 6 hours under the atmosphere of air to obtain a metal structure provided with a zirconium dioxide coating layer as a passivation layer on the surface of the metal structure.

### <Examples 2-9 and Comparative Examples 1-6>

Example 1 was repeated, except that the type and content of the second solution and the content of each of ethanol, polysorbic acid and ethylene glycol were controlled as shown in Table 1. In addition, butanol was used instead of ethanol in Comparative Example 5.

Further, the value of Equation 1 was calculated in each of Examples and Comparative Examples. The results are shown in the following Table 2.

**[Table 1]**

| | Second solution | | Ethanol (parts by weight) | Polysorbic acid (parts by weight) | Ethylene glycol (parts by weight) |
|---|---|---|---|---|---|
| | Type | Content (parts by weight) | | | |
| Example 1 | Preparation Example 1 | 10 | 90 | 10 | 2 |
| Example 2 | Preparation Example 1 | 5 | 95 | 10 | 1 |
| Example 3 | Preparation Example 3 | 5 | 95 | 10 | 1 |
| Example 4 | Preparation Example 1 | 15 | 85 | 10 | 2 |
| Example 5 | Preparation Example 1 | 15 | 85 | 10 | 4 |
| Example 6 | Preparation Example 2 | 25 | 75 | 20 | 1.5 |
| Example 7 | Preparation Example 2 | 25 | 75 | 40 | 1.5 |
| Example 8 | Preparation Example 2 | 30 | 70 | 15 | 1.5 |
| Example 9 | Preparation Example 4 | 10 | 90 | 10 | 1.5 |
| Comparative Example 1 | Preparation Example 2 | 40 | 60 | 10 | 2 |
| Comparative Example 2 | Preparation Example 1 | 20 | 80 | - | 1 |
| Comparative Example 3 | Preparation Example 2 | 20 | 80 | - | 2 |
| Comparative Example 4 | Preparation Example 1 | 100 | - | - | 100 |
| Comparative Example 5 | Preparation Example 1 | 20 | Butanol 80 | 10 | 2 |
| Comparative Example 6 | Preparation Example 4 | 30 | 70 | 10 | 1.5 |

**[Table 2]**

| | A | B | Value of Equation 1 |
|---|---|---|---|
| Example 1 | 0.6 | 10/110 | 0.055 |
| Example 2 | 0.6 | 5/110 | 0.027 |
| Example 3 | 0.2 | 5/110 | 0.009 |
| Example 4 | 0.6 | 15/110 | 0.082 |
| Example 5 | 0.6 | 15/110 | 0.082 |
| Example 6 | 0.4 | 25/120 | 0.083 |
| Example 7 | 0.4 | 25/140 | 0.071 |
| Example 8 | 0.4 | 30/115 | 0.104 |
| Example 9 | 0.5 | 10/110 | 0.045 |
| Comparative Example 1 | 0.4 | 40/110 | 0.145 |
| Comparative Example 2 | 0.6 | 20/100 | 0.120 |
| Comparative Example 3 | 0.4 | 20/100 | 0.080 |
| Comparative Example 4 | 0.6 | 100/100 | 0.600 |
| Comparative Example 5 | 0.6 | 20/110 | 0.109 |
| Comparative Example 6 | 0.5 | 30/110 | 0.136 |

| | | | |
|---|---|---|---|
| A: Molar concentration (M) of Zr in second solution B: Weight ratio of second solution based on total weight of second solution, ethanol and polysorbic acid | | | |

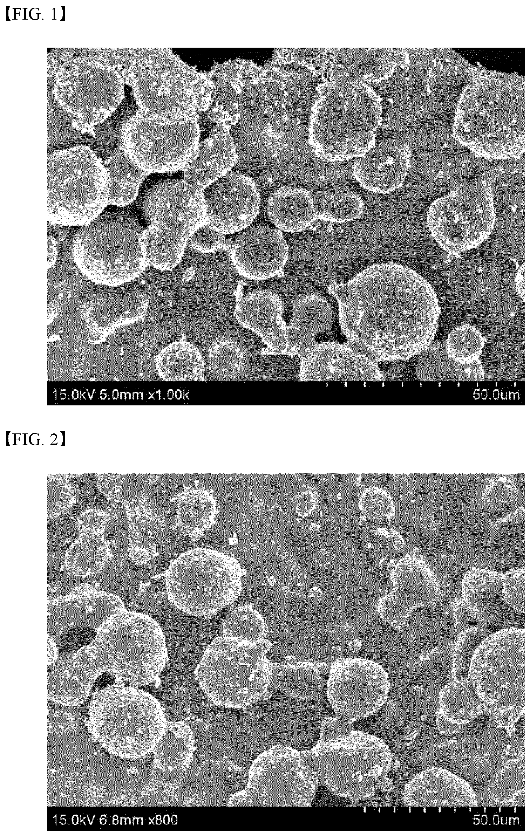

FIG. 1 is a scanning electron microscopic (SEM) image illustrating the surface of a metal structure coated according to Example 1.
FIG. 2 is a scanning electron microscopic (SEM) image illustrating the surface of a metal structure coated according to Example 6.

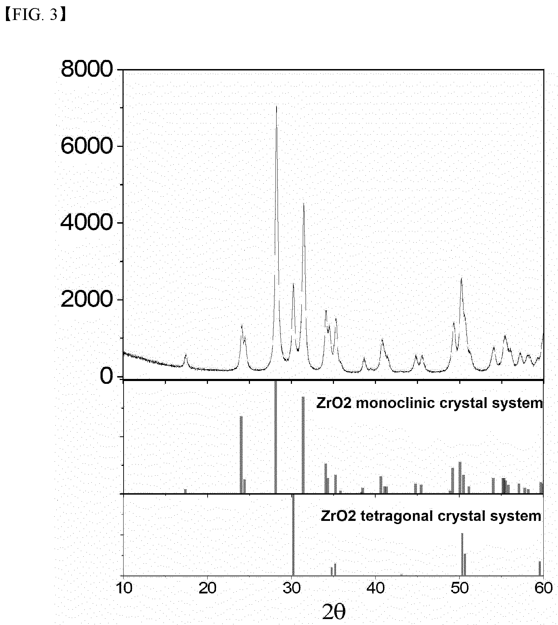

FIG. 3 shows an X-ray diffractometry (XRD) image of a powder sample of powder prepared by drying the coating composition of Example 8, after being heat treated at 700°C for 3 hours.

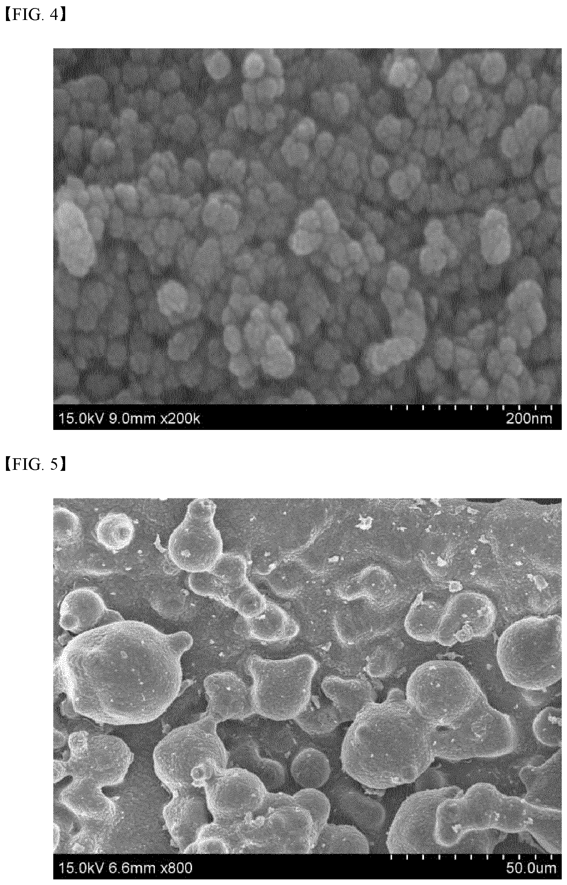

FIG. 4 shows an SEM image of a powder sample of powder prepared by drying the coating composition of Example 8, after being heat treated at 700°C for 3 hours.
FIG. 5 is an SEM image illustrating the surface of a metal structure coated according to Example 8.

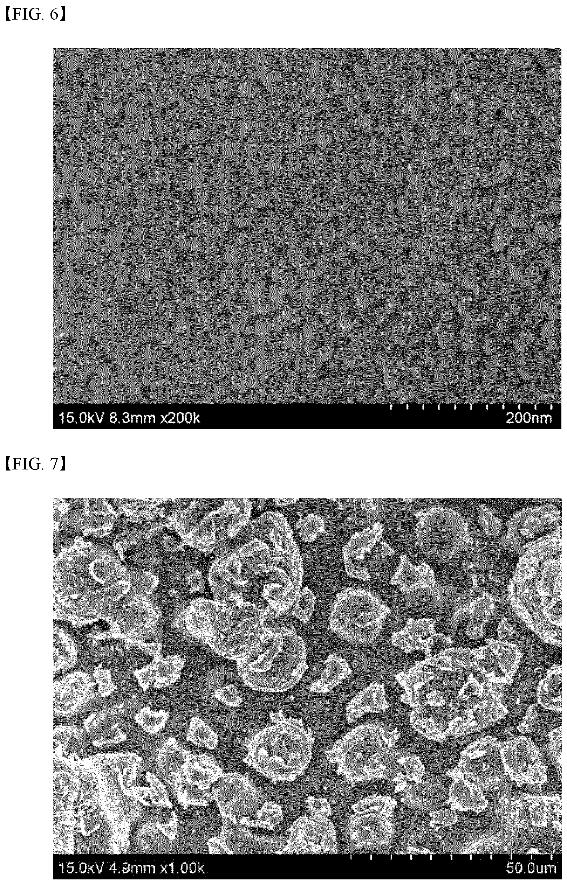

FIG. 6 is a high-magnification SEM image illustrating a passivation layer coated according to Example 8.
FIG. 7 is an SEM image illustrating the surface of a metal structure coated according to Comparative Example 2.

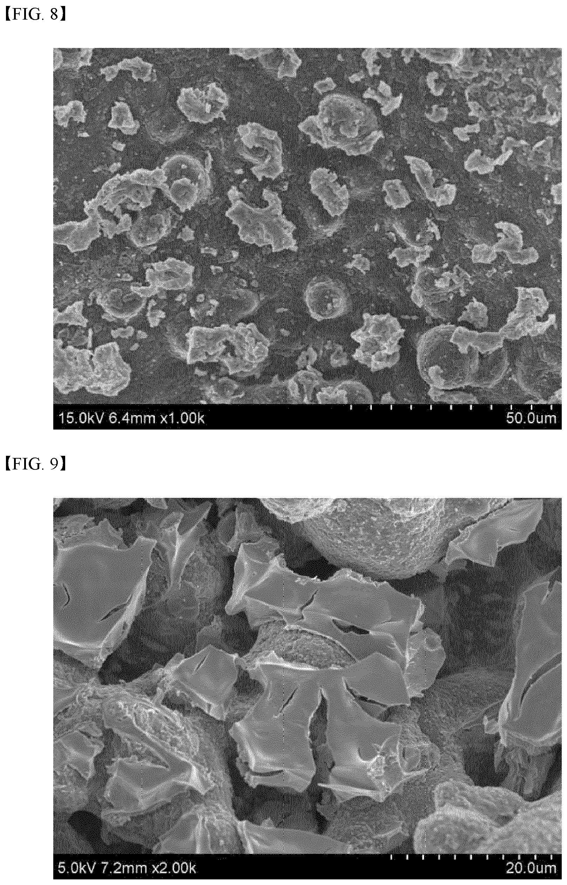

FIG. 8 is an SEM image illustrating the surface of a metal structure coated according to Comparative Example 3.
FIG. 9 is an SEM image illustrating the surface of a metal structure coated according to Comparative Example 5.

As shown in the results of FIG. 1, FIG. 2 and FIG. 5, it can be seen that the coated zirconium dioxide layer, which satisfies the value of Equation 1, does not show defects, such as cracks or pinholes, and well covers the surface of the metal structure. Due to the characteristics of a process for manufacturing a metal structure, many three-dimensional surface irregularities having a large difference in height are formed inevitably. However, despite the presence of such surface irregularities, the surface of the metal structure is coated very smoothly. In addition, although the coating amount on the surface of the metal structure may vary depending on the concentration, viscosity, coating condition, etc. of the zirconia solution, the coating amount is shown to be 1 wt% to 3 wt% in general. By virtue of such a uniform coating layer, the metal structure can be chemically protected well from the outside, which is similar to surface coating for preventing a car from corrosion. In addition, when the number of coatings is increased as necessary, it is possible to increase the thickness of a passivation layer, and thus to enhance the effect of protecting a metal structure. Further, when a catalyst is additionally coated on the metal structure having a zirconium dioxide thin film formed thereon, the zirconium dioxide thin film may function as a barrier to provide an effect of preventing a part of materials of the metal structure from being diffused into the catalyst layer.

Since the metal structure as a support layer was present after the coating step, the coating solution was dried separately and heat treated at 700°C to obtain powder, which was determined through X-ray diffractometry (XRD) in order to facilitate crystalline phase analysis. As shown in the results of FIG. 3, it can be seen that zirconium dioxide has a crystal structure comprising a monoclinic crystal system mixed with a tetragonal crystal system. After calculating the amount of crystalline phases through the Rietveld quantitative analysis, it can be seen that about 85.5% of a tetragonal crystal system and about 14.5% of an orthorhombic crystal system are present.

In addition, as shown in the results of FIG. 4, it is shown that zirconium dioxide has a crystallite size of about 15 nm to 30 nm. FIG. 6 shows the results obtained by observing a zirconium dioxide passivation layer coated on a metal structure through SEM at a high magnification. It can be seen that FIG. 6 shows a crystallite structure similar to that of FIG. 4.

However, in the case of Comparative Examples 1, 4 and 6, they have a value of Equation 1 of 0.11 or more, and thus severe gelling of the coating solution occurs with the lapse of time and the subsequent dip coating step was not allowed.

In addition, in the case of Comparative Examples 2-4 wherein no polysorbic acid is added, it can be seen that the coating layer shows significantly low uniformity as shown in FIG. 7 and FIG. 8, and thus merely island-like partial coating is allowed and the surface of the metal structure is exposed.

Further, in the case of Comparative Example 5 wherein butanol is used instead of ethanol in preparing the third solution, the solution shows reduced dispersibility and increased surface energy as shown in FIG. 9, and thus it is not possible to form a uniform coating layer.

## Claims

1. A method for preparing a coating composition, comprising the steps of:
mixing a zirconium precursor and a first polyhydric alcohol to prepare a first solution;
adding a binder to the first solution to prepare a second solution; and
adding ethanol, polysorbic acid and a second polyhydric alcohol to the second solution to prepare a third solution,
the method satisfying the following Equation 1: [Equation 1] 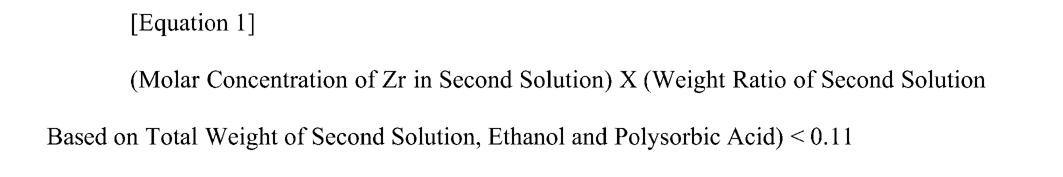 (Molar Concentration of Zr in Second Solution) X (Weight Ratio of Second Solution Based on Total Weight of Second Solution, Ethanol and Polysorbic Acid) < 0.11

2. The method for preparing the coating composition according to claim 1, wherein the zirconium precursor is zirconium propoxide.

3. The method for preparing the coating composition according to claim 1, wherein the first polyhydric alcohol comprises at least one of 1,4-butanediol, diethylene glycol and triethylene glycol.

4. The method for preparing the coating composition according to claim 1, wherein the step of preparing a first solution is carried out at a temperature of 70°C to 130°C.

5. The method for preparing the coating composition according to claim 1, wherein the binder comprises polyvinyl pyrrolidone (PVP).

6. The method for preparing the coating composition according to claim 1, wherein the second polyhydric alcohol comprises ethylene glycol.

7. The method for preparing the coating composition according to claim 1, wherein the coating composition has a pH value of 6.5 to 7.5.

8. The method for preparing the coating composition according to claim 1, wherein the coating composition is applied to a passivation layer of a metal structure, a highly refractive coating layer of a glass substrate, a heat-shielding coating layer of a gas turbine, or a bioceramic coating layer of an artificial bone.

9. A method for preparing a zirconium dioxide coating layer, comprising the steps of:
preparing a substrate; and
coating the surface of the substrate with the coating composition obtained by the method as defined in any one of claims 1 to 7, followed by drying and firing, to form the zirconium dioxide coating layer on the surface of the substrate.

10. The method for preparing the zirconium dioxide coating layer according to claim 9, wherein the zirconium dioxide coating layer is a passivation layer of a metal structure, a highly refractive coating layer of a glass substrate, a heat-shielding coating layer of a gas turbine, or a bioceramic coating layer of an artificial bone.
